# DEMANDE DE BREVET EUROPEEN

(11) **EP 1 465 310 A1**
(43) Date de publication de la demande: **06.10.2004**
(21) Numéro de dépôt: 04290839.2
(22) Date de dépôt: 30.03.2004
(51) Int. Cl.: H02G 3/12

(54) **Boîte d'encastrement pour cloison sèche**

(30) Priorité: 02.04.2003 FR 0304122
(71) Demandeur: LEGRAND, 87000 Limoges (FR); LEGRAND SNC, 87045 Limoges (FR)
(72) Inventeur: Favalessa, Thierry, 87240 Ambazac (FR); Gourcerol, Jean-Jacques, 87220 Feytiat (FR); Guibert, Jean-Sébastien, 87100 Limoges (FR)
(74) Mandataire: Santarelli

(57) **Abrégé**

La présente invention concerne une boîte d'encastrement (100) comprenant un fond (110) et une paroi latérale (120) comportant, sur sa face externe (121), des renfoncements (122) qui s'élargissent pour former des logements (140) destinés à accueillir des griffes (150), chaque renfoncement étant destiné à recevoir le corps (201) d'une vis (200) coopérant avec une desdites griffes apte à prendre deux positions, à savoir une position rétractée à l'intérieur dudit logement et une position en saillie de la face externe de ladite paroi latérale.

Selon l'invention, chaque logement recevant une griffe comporte intérieurement une rampe (141) en forme de portion d'hélice qui est destinée à coopérer avec ladite griffe pour faire pivoter ladite griffe depuis sa position rétractée jusqu'à sa position en saillie lorsque la vis coopérant avec la griffe est tirée vers l'extérieur dudit renfoncement.

## Description

La présente invention concerne de manière générale les boîtes d'encastrement pour cloisons sèches, telles que des cloisons alvéolaires.

On entend ici par boîte d'encastrement, tout type de boîte à encastrer dans une cloison sèche, telle qu'une boîte recevant un ou plusieurs appareillages électriques comme des interrupteurs ou des prises de courant ou encore des boîtes de dérivation pour le routage des câbles et/ou des conducteurs électriques, de telles boîtes pouvant contenir des coupe-circuits.

Elle concerne plus particulièrement une boîte d'encastrement apte à contenir des câbles et/ou des conducteurs électriques, comprenant un fond, une paroi latérale et une ouverture frontale prévue à l'opposé dudit fond, ladite paroi latérale comportant, sur sa face externe, des renfoncements qui s'étendent depuis le bord de l'ouverture frontale jusqu'à proximité du fond de la boîte d'encastrement où ils s'élargissent pour former des logements destinés à accueillir des griffes, chaque renfoncement étant destiné à recevoir le corps fileté d'une vis coopérant avec une des griffes apte à prendre deux positions, à savoir une position rétractée à l'intérieur dudit logement pour l'engagement de la boîte d'encastrement dans un trou d'une paroi et une position en saillie de la face externe de ladite paroi latérale pour l'ancrage de la boîte d'encastrement à l'intérieur du trou.

Elle concerne également un procédé de montage d'une telle boîte d'encastrement dans une cloison sèche.

On connaît déjà, notamment des documents FR 2 670 625 et FR 2 780 567, des boîtes d'encastrement du type précité dans lesquelles chaque vis est vissée dans le sens des aiguilles d'une montre à l'aide d'un tournevis pour faire pivoter chaque griffe d'un quart de tour depuis sa position rétractée jusqu'à sa position en saillie de la face externe de la paroi latérale, et pour faire coulisser ladite griffe en position en saillie dans ledit renfoncement jusqu'à ce qu'elle vienne s'appuyer contre la face interne de la cloison sèche considérée.

De telles boîtes d'encastrement sont relativement longues et difficiles à mettre en place dans la cloison sèche correspondante du fait du vissage de chacune des vis portant les griffes d'ancrage.

En outre, dans une boîte d'encastrement de ce type, les moyens de montage d'un appareillage électrique sont prévus en surplus des vis coopérant avec les griffes pour l'ancrage de la boîte d'encastrement dans la paroi. Ces moyens de montage sont par exemple des vis de fixation associées ou non à des crans prévus sur la face interne de la paroi latérale de la boîte d'encastrement coopérant avec des griffes d'ancrage de l'appareillage électrique concerné.

Par rapport à l'état de la technique précité, la présente invention propose une nouvelle boîte d'encastrement dont la mise en place par l'installateur dans une paroi est largement simplifiée du fait notamment qu'elle peut se faire sans l'aide d'un quelconque outil.

Plus particulièrement, l'invention propose une boîte d'encastrement caractérisée en ce que chaque logement recevant une griffe comporte intérieurement une rampe en forme de portion d'hélice qui est destinée à coopérer avec ladite griffe pour faire pivoter ladite griffe depuis sa position rétractée jusqu'à sa position en saillie lorsque la vis coopérant avec la griffe est tirée vers l'extérieur dudit renfoncement.

Avantageusement, selon l'invention, ladite rampe est destinée à coopérer avec ladite griffe pour faire pivoter ladite griffe depuis sa position en saillie jusqu'à sa position rétractée lorsque, en cas de démontage de ladite boîte d'encastrement, ladite vis est poussée vers l'intérieur dudit renfoncement.

D'autres caractéristiques non limitatives et avantageuses de la boîte d'encastrement selon l'invention sont les suivantes :
- chaque griffe comprend des moyens d'accrochage aptes à coopérer avec des moyens d'accrochage complémentaires prévus dans chaque renfoncement de manière à autoriser le déplacement à translation de ladite griffe dans ledit renfoncement lorsque la vis coopérant avec la griffe est tirée vers l'extérieur dudit renfoncement, et à bloquer ladite griffe en position en saillie dans ledit renfoncement lorsque, après traction, ladite vis est poussée vers l'intérieur dudit renfoncement ;
- lesdits moyens d'accrochage de chaque griffe comprennent au moins une dent, et lesdits moyens d'accrochage complémentaires comprennent au moins une série de crans échelonnés sur la hauteur du renfoncement ;
- chaque série de crans est prévue dans le fond du renfoncement correspondant ;
- chaque série de crans est prévue sur un côté latéral du renfoncement correspondant ;
- lesdits moyens d'accrochage de chaque griffe comprennent au moins une dent qui s'arc-boute dans le fond dudit renfoncement ;
- chaque griffe comporte intérieurement un écrou fileté pourvu de pattes aptes à prendre appui sur des rebords internes de la griffe correspondante lorsque, après traction vers l'extérieur, la vis est poussée vers l'intérieur dudit renfoncement ;
- le filetage de l'écrou prévu à l'intérieur de chaque griffe est tel qu'il autorise la griffe à tourner librement autour de la vis correspondante lorsque cette dernière est tirée vers l'extérieur du renfoncement pour positionner la griffe en position en saillie de la face externe de la paroi latérale de la boîte d'encastrement ; et
- l'écrou fileté comprend des languettes qui prennent appui sur le corps fileté de la vis et qui sont aptes à s'écarter élastiquement dudit corps fileté de la vis lorsque, après traction vers l'extérieur, ladite vis est poussée vers l'intérieur dudit renfoncement.

En outre, de façon tout à fait avantageuse, dans la boîte d'encastrement selon l'invention les vis coopérant avec les griffes pour l'ancrage de ladite boîte d'encastrement dans la paroi sont destinées également à la fixation d'un appareillage électrique dans ladite boîte d'encastrement.

Ainsi, la boîte d'encastrement selon l'invention est très simple d'utilisation puisque, avec un jeu unique de vis, on peut l'ancrer dans la paroi et fixer à l'intérieur de celle-ci un quelconque appareillage électrique.

L'invention propose également un procédé de montage d'une boîte d'encastrement du type précité comprenant les étapes selon lesquelles :
a) on réalise un trou dans la cloison sèche,
b) on positionne la boîte d'encastrement dans le trou, avec ses vis enfoncées dans leur renfoncement de telle sorte que chaque griffe associée est placée en position rétractée dans son logement,
c) on tire longitudinalement chaque vis vers l'extérieur de chaque renfoncement de manière à faire pivoter chaque griffe depuis sa position rétractée vers sa position en saillie et à la déplacer dans le renfoncement correspondant pour la mettre en appui contre la face interne de la cloison sèche, et
d) on pousse longitudinalement chacune des vis dans son renfoncement à travers l'écrou de chaque griffe bloquée en position en saillie dans ledit renfoncement pour positionner chaque vis en position d'attente,

Ce procédé pour l'encastrement d'un appareillage électrique comporte préférentiellement, outre les étapes a) à d), les étapes suivantes :
- on positionne un support d'appareillage électrique sur la face externe de la cloison sèche de sorte que des ouvertures dudit support s'engagent sur lesdites vis en position d'attente,
- on visse les vis au travers des écrous des griffes pour bloquer le support d'appareillage électrique en appui sur la face externe de la cloison sèche, et
- on positionne le mécanisme d'appareillage électrique dans la boîte d'encastrement et on le fixe sur le support d'appareillage électrique.

Enfin, selon ce procédé, le démontage de ladite boîte d'encastrement comprend les étapes suivantes :
- on dévisse les vis jusqu'à ce que lesdites griffes soient positionnées aux extrémités libres des corps filetés des vis,
- on sort la boîte d'encastrement du trou de la cloison sèche, et
- on pousse légèrement en biais lesdites vis dans leur renfoncement de manière à dégager chacune desdites griffes de sa coopération avec les moyens d'accrochage complémentaires dudit renfoncement et à déplacer ladite griffe dans le renfoncement jusqu'à ce qu'elle coopère avec la rampe en forme de portion d'hélice du logement situé au bout du renfoncement pour pivoter depuis sa position en saillie jusqu'à sa position rétractée dans ledit logement.

La description qui va suivre en regard des dessins annexés, donnés à titre d'exemples non limitatifs, fera bien comprendre en quoi consiste l'invention et comment elle peut être réalisée.

Sur les dessins annexés :
- les figures 1A à 1E montrent les différentes étapes du procédé de montage selon l'invention avec la boîte d'encastrement selon l'invention ;
- la figure 2 montre une vue de derrière d'une boîte d'encastrement selon l'invention positionnée dans une paroi ;
- la figure 3 montre une vue de détail d'un renfoncement de la boîte d'encastrement selon l'invention ;
- la figure 4 montre une vue de détail partiellement coupée d'une des griffes de la boîte d'encastrement selon l'invention coopérant avec les crans du renfoncement correspondant ;
- la figure 5 est une vue de détail de côté de l'écrou prévu dans la griffe de la boîte d'encastrement selon l'invention ; et
- la figure 6 est une vue de détail partiellement coupée d'une variante de réalisation des griffes de la boîte d'encastrement selon l'invention coopérant avec le fond du renfoncement correspondant.

Sur les figures on a représenté une boîte d'encastrement 100 apte à contenir ici un appareillage électrique, tel qu'un interrupteur ou une prise électrique, ainsi que les câbles et/ou les conducteurs électriques nécessaires à sa desserte. Cette boîte d'encastrement 100 est destinée à être mise en place dans un trou 2 d'une cloison sèche 1 du type cloison alvéolaire.

Elle comprend un fond 110, une paroi latérale 120 sensiblement cylindrique de révolution autour d'un axe X qui définie intérieurement un logement, et une ouverture frontale 130 prévue à l'opposé dudit fond 110 pour l'introduction du mécanisme d'appareillage (non représenté) dans ledit logement de la boîte d'encastrement 100.

La boîte d'encastrement 100 comporte à proximité de son fond 110 des ouvertures 111 qui débouchent à l'intérieur de ladite boîte et qui servent au raccordement de gaines d'amenée de câbles et/ou de conducteurs électriques (non représentées).

En outre, sa paroi latérale 120 comporte, sur sa face externe 121, des renfoncements 122 qui s'étendent parallèlement à l'axe X depuis le bord 131 de l'ouverture frontale 130 jusqu'à proximité du fond 110 de la boîte d'encastrement 100 où ils s'élargissent pour former des logements 140 destinés à accueillir des griffes 150 (ici deux griffes) destinées à l'ancrage de ladite-boîte d'encastrement 100 dans la cloison sèche 1.

Chaque renfoncement 122 est destiné à recevoir le corps 201 fileté d'une vis 200 coopérant avec une desdites griffes 150. Pour cela, chaque renfoncement 122 débouche au niveau du bord 131 de l'ouverture frontale 130 par un orifice 124. Il est ici prévu, sur la face externe 121 de la paroi latérale 120, deux renfoncements 122 diamétralement opposés. Le corps 201 fileté de chaque vis 200 est introduit dans chaque renfoncement 122, via l'orifice 124 correspondant, de sorte que la tête de chaque vis 200 est accessible du côté de l'ouverture frontale 130 de ladite boîte d'encastrement 100.

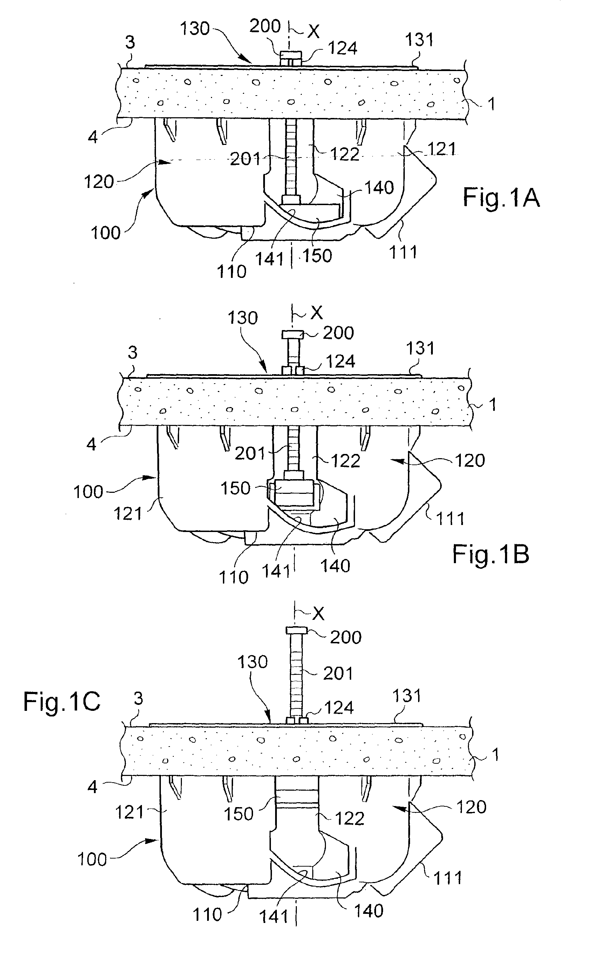

Chacune des griffes 150 est apte à prendre deux positions, à savoir, d'une part, une position rétractée à l'intérieur dudit logement 140 de sorte qu'elle se trouve placée à l'intérieur du gabarit de la boîte d'encastrement 100 pour l'engagement de celle-ci dans un trou 2 de la cloison sèche 1 (voir figure 1A), et, d'autre part, une position en saillie de la face externe 121 de ladite paroi latérale 120 (voir figure 1B) pour l'ancrage de la boîte d'encastrement 100 à l'intérieur du trou 2.

De façon particulièrement avantageuse, chaque logement 140 recevant une griffe 150 prévue pour l'ancrage de la boîte d'encastrement 100 dans la cloison sèche 1, comporte intérieurement une rampe 141 en forme de portion d'hélice qui est destinée à coopérer avec ladite griffe 150 pour faire pivoter celle-ci depuis sa position rétractée jusqu'à sa position en saillie lorsque la vis 200 coopérant avec la griffe 150 est tirée vers l'extérieur dudit renfoncement 122.

En outre, chaque rampe 141 en forme de portion d'hélice de chaque logement 140 de la boîte d'encastrement 100 est apte à faire pivoter chaque griffe 150 depuis sa position en saillie jusqu'à sa position rétractée lorsque, en cas de démontage de la boîte d'encastrement 100, chaque vis 200 est poussée vers l'intérieur du renfoncement 122.

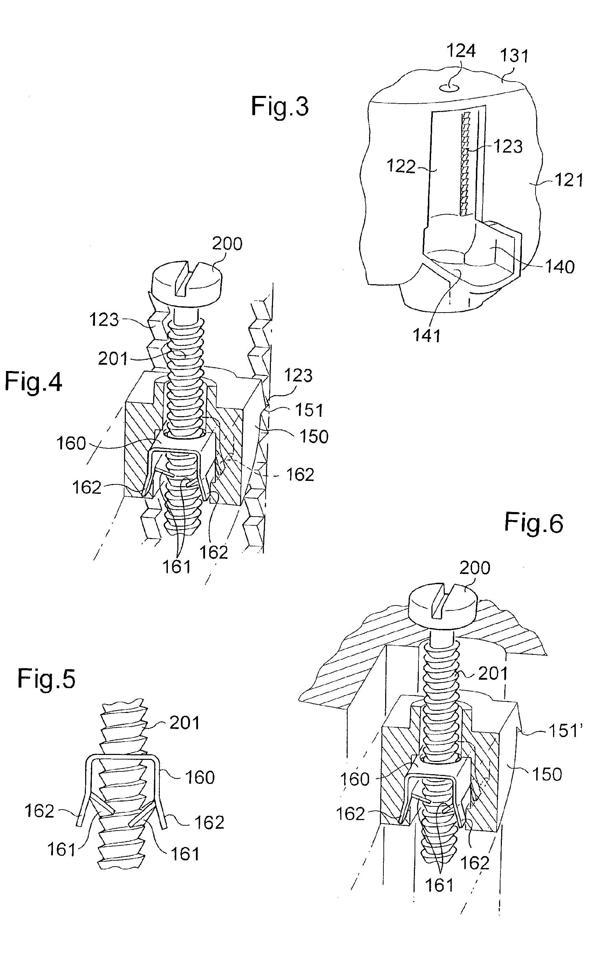

Comme le montrent plus particulièrement les figures 3 à 5, chaque griffe 150 coopérant avec une vis 200 de la boîte d'encastrement 100 comporte des moyens d'accrochage 151 aptes à coopérer avec des moyens d'accrochage 123 complémentaires prévus dans chaque renfoncement 122 de manière à autoriser le déplacement à translation de ladite griffe 150 dans ledit renfoncement 122 lorsque chaque vis 200 coopérant avec chaque griffe 150 est tirée vers l'extérieur du renfoncement 122, et à bloquer chaque griffe 150 en position en saillie dans ledit renfoncement 122 lorsque, après traction, ladite vis 200 est poussée vers l'intérieur dudit renfoncement 122.

Ici, les moyens d'accrochage de chaque griffe 150 comprennent deux dents 151, et les moyens d'accrochage complémentaires comprennent deux séries de crans 123 échelonnés sur la hauteur du renfoncement 122.

Comme le montre plus particulièrement la figure 3, chaque série de crans 123 est ici prévue dans le fond du renfoncement 122 correspondant mais, selon une variante non représentée, on peut prévoir que la ou les séries de crans soient prévues sur un ou les deux côtés latéraux dudit renfoncement.

Selon une variante de l'invention représentée sur la figure 6, les moyens d'accrochage de chaque griffe 150 comprennent au moins une dent 151' qui s'ancre en s'arc-boutant dans la matière de la paroi latérale 120 au fond du renfoncement 122.

En outre, chaque griffe 150, réalisée en matière plastique moulée, comporte intérieurement un écrou 160 fileté traversé par le corps 201 fileté de chaque vis 200. C'est par l'intermédiaire de cet écrou 160 que chaque vis 200 coopère avec chaque griffe 150.

Chaque écrou 160 fileté présente globalement une forme en U avec, sur ses côtés latéraux, des pattes 162 qui prennent appui sur des rebords internes de la griffe 150 correspondante pour son maintien à l'intérieur de ladite griffe 150.

Ici, chaque écrou 160 est assemblé avec la griffe 150 correspondante, mais on pourrait prévoir, selon une variante non représentée, que la griffe soit surmoulée sur chaque écrou.

Avantageusement, le filetage de l'écrou 160 prévu à l'intérieur de chaque griffe 150 est tel qu'il autorise la griffe 150 à tourner librement autour de la vis 200 correspondante lorsque cette dernière est tirée vers l'extérieur du renfoncement 122 pour positionner la griffe en position en saillie de la face externe 121 de la paroi latérale 120 de la boîte d'encastrement 100.

En outre, lorsque chaque vis 200 est vissée ou dévissée alors que la griffe 150 est accrochée sur les séries de crans 123 du renfoncement 122, le filetage de l'écrou 160 coopère avec le filetage du corps 201 fileté de la vis 200 pour permettre à ladite vis de se déplacer en translation dans ledit renfoncement 122.

Avantageusement, chaque écrou 160 fileté, prévu à l'intérieur de chaque griffe 150, est pourvu de languettes 161 qui prennent appui sur le corps 201 fileté de la vis 200 correspondante pour solidariser chaque griffe 150 à chaque vis 200 lorsque cette dernière est tirée vers l'extérieur du renfoncement 122 correspondant.

Ainsi, lorsque chaque griffe 150 est accrochée sur la série de crans 123 du renfoncement 122 correspondant et que chaque vis 200 est poussée longitudinalement vers l'intérieur du renfoncement 122, les languettes 161 de l'écrou 160 s'écartent élastiquement pour laisser passer le corps 201 fileté de la vis 200 et les pattes 162 dudit écrou 160 prennent appui sur les rebords internes de la griffe 150 accrochée dans le renfoncement 122. De cette manière, l'écrou 160 reste en place dans la griffe 150 qui ne bouge pas et reste accrochée dans le renfoncement 122 en position en saillie.

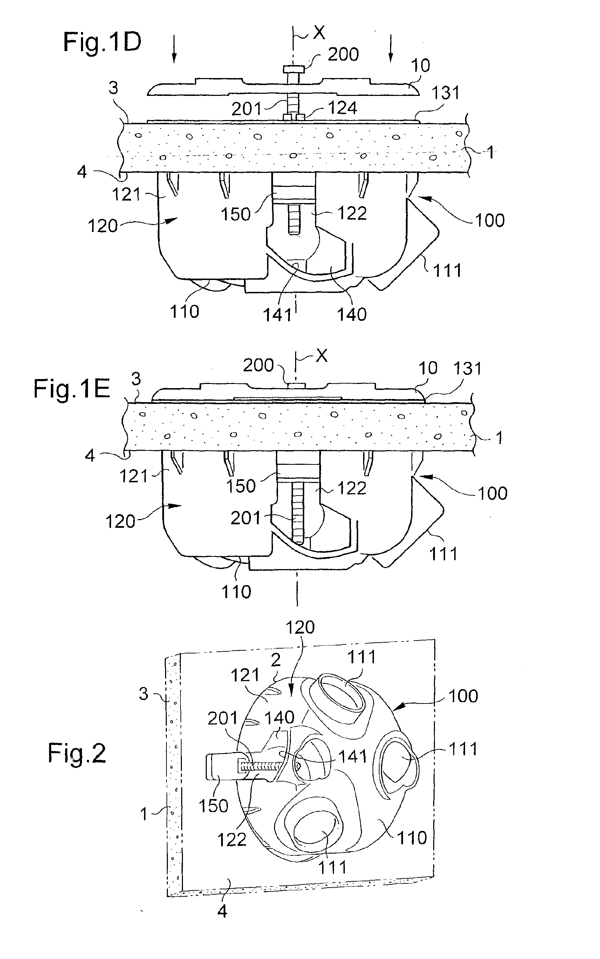

Comme le montrent plus particulièrement les figures 1D et 1E, avantageusement, les vis 200 coopérant avec les griffes 150 pour l'ancrage de la boîte d'encastrement 100 dans la cloison sèche 1 sont également destinées à la fixation d'un appareillage électrique dans la boîte d'encastrement 100.

La boîte d'encastrement 100 est réalisée d'une seule pièce par moulage d'une matière plastique, chaque vis 200 coopérant avec chaque griffe 150 étant bien entendu rapportée sur celle-ci.

En référence aux figures 1A à 1C, nous allons maintenant décrire le procédé de montage selon l'invention d'une boîte d'encastrement 100 telle que décrite ci-dessus dans une cloison sèche 1.

Un tel procédé de montage comprend les étapes suivantes.

Comme le montre la figure 1A, après avoir réalisé un trou 2 dans la cloison sèche 1, l'installateur positionne la boîte d'encastrement 100 dans le trou 2 avec ses vis 200 enfoncées dans les renfoncements 122 de telle sorte que les griffes 150 associées sont placées en position rétractée dans les logements 140 correspondants.

Puis, comme le montre la figure 1B, l'installateur tire longitudinalement chaque vis 200 vers l'extérieur de chaque renfoncement 122 de manière à faire pivoter chaque griffe 150 depuis sa position rétractée vers sa position en saillie et à la déplacer dans le renfoncement 122 correspondant pour la mettre en appui contre la face interne 4 de la cloison sèche 1 (voir figures 1C et 2).

Le pivotement de chacune des griffes 150 depuis sa position rétractée vers sa position en saillie est réalisé par la coopération de la griffe 150 avec la rampe 141 en forme de portion d'hélice du logement 140 dans laquelle elle est logée lors de la traction de la vis 200 vers l'extérieur du renfoncement 122.

Puis, comme le montre la figure 1D, l'installateur pousse longitudinalement chaque vis 200 dans son renfoncement 122 à travers l'écrou 160 de chaque griffe 150 bloquée en position en saillie dans le renfoncement 122, pour positionner chaque vis 200 en position d'attente.

Lors de cette étape, chacune des griffes 150 reste en place en position en saillie dans le renfoncement 122 par la coopération de ses moyens d'accrochage 151 avec les moyens d'accrochage 123 complémentaires du renfoncement 122 correspondant.

En outre, lors de cette opération de poussée, les languettes 161 de chaque écrou 160 s'écartent élastiquement pour laisser passer le corps 201 fileté de la vis 200 et les pattes 162 prennent appui sur les rebords internes de la griffe 150 pour éviter que l'écrou 160 ne soit entraîné en translation avec la vis 200 et reste en place dans la griffe 150 accrochée dans le renfoncement 122 en position en saillie.

Un tel procédé de montage est simple et rapide et ne nécessite pas l'utilisation d'un quelconque outil de vissage ou d'un quelconque autre outil.

Selon ce procédé, pour encastrer un appareillage électrique, outre les étapes précédentes, comme le montre la figure 1D, l'installateur positionne un support d'appareillage électrique 10 sur la face externe 3 de la cloison sèche 1 de sorte que les ouvertures dudit support 10 s'engagent sur les vis 200 en position d'attente.

Bien entendu, on pourrait prévoir que le support d'appareillage électrique 10 soit mis en place sur les vis 200 avant que celles-ci ne soient poussées dans lesdits renfoncements 122 pour être positionnées en position d'attente de vissage.

Puis, comme le montre la figure 1E, l'installateur visse les vis 200 au travers des écrous 160 des griffes 150 pour bloquer le support d'appareillage électrique 10 en appui sur la face externe 3 de la cloison sèche 1.

Enfin, il positionne le mécanisme d'appareillage électrique dans la boîte d'encastrement 100 et le fixe au support d'appareillage électrique.

Avantageusement, on notera que les vis 200 servant à l'ancrage de la boîte d'encastrement 100 dans la paroi servent également au maintien du support d'appareillage électrique 10 recevant le mécanisme d'un appareillage électrique quelconque.

Pour démonter une telle boîte d'encastrement 100, il suffit que l'installateur dévisse chacune des vis 200 de sorte que les griffes 150 soient positionnées aux extrémités libres des corps 201 filetés des vis puis sort la boîte d'encastrement du trou de la cloison sèche 1 et pousse légèrement en biais lesdites vis 200 dans leur renfoncement 122 au travers de l'orifice 124 de manière à dégager chacune des griffes 150 de sa coopération avec les moyens d'accrochage 123 complémentaires du renfoncement 122 et à déplacer ladite griffe 150 dans le renfoncement 122 jusqu'à ce qu'elle coopère avec la rampe 141 en forme de portion d'hélice du logement 140 situé au bout du renfoncement 122 pour pivoter depuis sa position en saillie jusqu'à sa position rétractée dans ledit logement 140.

L'invention n'est nullement limitée au mode de réalisation décrit et représenté, mais l'homme du métier saura y apporter toute variante conforme à son esprit.

## Revendications

1. Boîte d'encastrement (100) apte à contenir des câbles et/ou des conducteurs électriques, comprenant un fond (110), une paroi latérale (120) et une ouverture frontale (130) prévue à l'opposé dudit fond (110), ladite paroi latérale (120) comportant, sur sa face externe (121), des renfoncements (122) qui s'étendent depuis le bord (131) de l'ouverture frontale (130) jusqu'à proximité du fond (110) de la boîte d'encastrement (100) où ils s'élargissent pour former des logements (140) destinés à accueillir des griffes (150), chaque renfoncement (122) étant destiné à recevoir le corps (201) fileté d'une vis (200) coopérant avec une desdites griffes (150) apte à prendre deux positions, à savoir une position rétractée à l'intérieur dudit logement (140) pour l'engagement de la boîte d'encastrement (100) dans un trou (2) d'une paroi (1) et une position en saillie de la face externe (121) de ladite paroi latérale (120) pour l'ancrage de la boîte d'encastrement (100) à l'intérieur du trou, **caractérisée en ce que** chaque logement (140) recevant une griffe (150) comporte intérieurement une rampe (141) en forme de portion d'hélice qui est destinée à coopérer avec ladite griffe (150) pour faire pivoter ladite griffe (150) depuis sa position rétractée jusqu'à sa position en saillie lorsque la vis (200) coopérant avec la griffe (150) est tirée vers l'extérieur dudit renfoncement (122).

2. Boîte d'encastrement (100) selon la revendication 1, **caractérisée en ce que** ladite rampe (141) est destinée à coopérer avec ladite griffe (150) pour faire pivoter ladite griffe (150) depuis sa position en saillie jusqu'à sa position rétractée lorsque, en cas de démontage de ladite boîte d'encastrement, ladite vis (200) est poussée vers l'intérieur dudit renfoncement (122).

3. Boîte d'encastrement (100) selon l'une des revendications 1 ou 2,
**caractérisée en ce que** chaque griffe (150) comprend des moyens d'accrochage (151) aptes à coopérer avec des moyens d'accrochage (123) complémentaires prévus dans chaque renfoncement (122) de manière à autoriser le déplacement à translation de ladite griffe (150) dans ledit renfoncement (122) lorsque la vis (200) coopérant avec la griffe (150) est tirée vers l'extérieur dudit renfoncement, et à bloquer ladite griffe (150) en position en saillie dans ledit renfoncement (122) lorsque, après traction, ladite vis (200) est poussée vers l'intérieur dudit renfoncement (122).

4. Boîte d'encastrement (100) selon la revendication 3, **caractérisée en ce que** lesdits moyens d'accrochage de chaque griffe (150) comprennent au moins une dent (151), et lesdits moyens d'accrochage complémentaires comprennent au moins une série de crans (123) échelonnés sur la hauteur du renfoncement (122).

5. Boîte d'encastrement (100) selon la revendication 4, **caractérisée en ce que** chaque série de crans (123) est prévue dans le fond du renfoncement (122) correspondant.

6. Boîte d'encastrement selon la revendication 4, **caractérisée en ce que** chaque série de crans est prévue sur un côté latéral du renfoncement correspondant.

7. Boîte d'encastrement (100) selon la revendication 3, **caractérisée en ce que** lesdits moyens d'accrochage de chaque griffe (150) comprennent au moins une dent (151') qui s'arc-boute dans le fond dudit renfoncement (122).

8. Boîte d'encastrement (100) selon l'une des revendications 1 à 7, **caractérisée en ce que** chaque griffe (150) comporte intérieurement un écrou (160) fileté pourvu de pattes (162) aptes à prendre appui sur des rebords internes de la griffe (150) correspondante lorsque, après traction vers l'extérieur, la vis (200) est poussée vers l'intérieur dudit renfoncement (122).

9. Boîte d'encastrement (100) selon la revendication 8, **caractérisée en ce que** le filetage de l'écrou (160) prévu à l'intérieur de chaque griffe (150) est tel qu'il autorise la griffe (150) à tourner librement autour de la vis (200) correspondante lorsque cette dernière est tirée vers l'extérieur du renfoncement (122) pour positionner la griffe en position en saillie de la face externe (121) de la paroi latérale (120) de la boîte d'encastrement (100).

10. Boîte d'encastrement (100) selon l'une des revendications 8 ou 9, **caractérisée en ce que** l'écrou (160) fileté comprend des languettes (161) qui prennent appui sur le corps (201) fileté de la vis (200) et qui sont aptes à s'écarter élastiquement dudit corps (201) fileté de la vis (200) lorsque, après traction vers l'extérieur, ladite vis (200) est poussée vers l'intérieur dudit renfoncement (122).

11. Boîte d'encastrement (100) selon l'une des revendications 1 à 10, **caractérisée en ce que** les vis (200) coopérant avec les griffes (150) pour l'ancrage de ladite boîte d'encastrement (100) dans la paroi sont destinées également à la fixation d'un appareillage électrique dans ladite boîte d'encastrement (100).

12. Procédé de montage d'une boîte d'encastrement (100) selon l'une des revendications 1 à 11 dans une cloison sèche (1), comprenant les étapes selon lesquelles :
a) on réalise un trou (2) dans la cloison sèche (1),
b) on positionne la boîte d'encastrement (100) dans le trou, avec ses vis (200) enfoncées dans leur renfoncement (122) de telle sorte que chaque griffe (150) associée est placée en position rétractée dans son logement (140),
c) on tire longitudinalement chaque vis (200) vers l'extérieur de chaque renfoncement (122) de manière à faire pivoter chaque griffe (150) depuis sa position rétractée vers sa position en saillie et à la déplacer dans le renfoncement (122) correspondant pour la mettre en appui contre la face interne (4) de la cloison sèche (1), et
d) on pousse longitudinalement chacune des vis (200) dans son renfoncement (122) à travers l'écrou (160) de chaque griffe (150) bloquée en position en saillie dans ledit renfoncement (122) pour positionner chaque vis (200) en position d'attente.

13. Procédé selon la revendication 11 pour l'encastrement d'un appareillage électrique, **caractérisé en ce qu'**il comporte, outre les étapes a) à d), les étapes suivantes :
- on positionne un support d'appareillage électrique (10) sur la face externe (3) de la cloison sèche (1) de sorte que des ouvertures dudit support (10) s'engagent sur lesdites vis (200) en position d'attente,
- on visse les vis (200) au travers des écrous (160) des griffes (150) pour bloquer le support d'appareillage électrique en appui sur la face externe (3) de la cloison sèche, et
- on positionne le mécanisme d'appareillage électrique dans la boîte d'encastrement (100) et on le fixe sur le support d'appareillage électrique (10).

14. Procédé selon l'une des revendications 12 ou 13, **caractérisé en ce que** le démontage de ladite boîte d'encastrement (100) comprend les étapes suivantes :
- on dévisse les vis (200) jusqu'à ce que lesdites griffes (150) soient positionnées aux extrémités libres des corps (201) filetés des vis (200),
- on sort la boîte d'encastrement (100) du trou (2) de la cloison sèche (1), et
- on pousse légèrement en biais lesdites vis (200) dans leur renfoncement (122) de manière à dégager chacune desdites griffes (150) de sa coopération avec les moyens d'accrochage (123) complémentaires dudit renfoncement (122) et à déplacer ladite griffe (150) dans le renfoncement (122) jusqu'à ce qu'elle coopère avec la rampe (141) en forme. de portion d'hélice du logement (140) situé au bout du renfoncement (122) pour pivoter depuis sa position en saillie jusqu'à sa position rétractée dans ledit logement (140).
